# EUROPEAN PATENT SPECIFICATION

(11) **EP 4 642 829 B1**
(45) Date of publication and mention of the grant of the patent: **27.05.2026**
(21) Application number: 23821971.1
(22) Date of filing: 08.12.2023
(51) Int. Cl.: C08G 59/24, C08G 59/40, C08G 59/56, C08G 59/50, C09D 163/00

(54) **EPOXIDE-BASED COMPOSITION**
EPOXIDBASIERTE ZUSAMMENSETZUNG
COMPOSITION À BASE D'ÉPOXYDE

(30) Priority: 28.12.2022 US 202263435647 P
(43) Date of publication of application: 05.11.2025
(73) Proprietor: Evonik Operations GmbH, 45128 Essen (DE)
(72) Inventor: LAL, Gauri Sankar, Breinigsville, PA 18031 (US); FAZEL, Shafiq, Allentown, PA 18104 (US); HAHN, Alexa, Schuylkill Haven, PA 17972 (US)
(74) Representative: Evonik Patent Association
(86) International application number: PCT/EP2023/084890
(87) International publication number: WO 2024/141243

(56) References cited:
- WO-A1-2014/056107
- US-A1- 2010 227 981

## Description

### TECHNICAL FIELD

The present invention relates to a curable epoxide-based composition. More specifically, the present invention relates to a curable epoxide-based composition which is a liquid under ambient conditions and has a relatively long pot life.

### BACKGROUND OF THE INVENTION

In some applications, it is preferred that the viscosity of an epoxy curing agent not change fundamentally for an extended period of time after combining an epoxide and a curing agent. Such a combination can facilitate the next step according to the intended use, such as coating, lamination, injection, potting or impregnation of composite compositions which contain reinforced or nonreinforced components.

When a combination of an epoxide component and a polyamine-based curing agent is left standing for a long period of time, a reaction can occur and the viscosity of the composition increases. Thus, the composition has a maximum time during which the composition can be used such as in coating, lamination, injection, potting or impregnation. The period of time beginning from combining the composition and ending when the viscosity increases of the combination is no longer capable of performing the desired working procedure, is referred to as "pot life", or working life. In many applications, a longer pot life is a desirable property to aid processing flexibility.

It is known in this art that a mixed composition comprising a solid epoxide component and similarly a solid curing agent component are known to have a long pot life (or shelf life). This is because the initiation of curing is depending on the thermal fusion of two components. Further, a large number of semi liquid-type compositions obtained by dispersing a solid curing agent component in a liquid epoxide component are known and also in this case, since the curing agent component is a solid, the initiation of curing is dependent on the thermal fusion of the curing agent component or mixing of two components due to mutual dissolution.

However, compositions containing solids have a drawback ascribable to the fact that at least one component is a solid. More specifically, in the case of a composite material, for example, a fiber reinforced composite comprising resin binders and fibers, the resin binder needs to penetrate into a fiber bundle, but when a solid component is used, a filtration phenomenon by the fiber occurs causing separation between binder components and, as a result, a curing failure may be brought about. The same applies to the case of using a woven fabric or the like for the reinforcing material. For this reason, a liquid epoxide component and a liquid curing agent component would be desirable as a material capable of overcoming such a problem.

Another drawback in known compositions is that these compositions have a relatively short pot life. Generally, in a composition having a short pot life, a reaction abruptly occurs and the time to reach the cured state is short, whereas in a composition having a long pot life, the time necessary for curing is long. As a result, there is a need in this art for a liquid epoxide-based composition having as long a pot life as several tens of hours, being curable at relatively low temperature range (moderate temperature range) of 100°C or less.

Such a composition comprising an epoxide and curing agent both being a liquid would enable paint coating for the purpose of protecting the inner surface of a water supply pipe, a sewer pipe or other industrial liquid transport pipes, or gas supply pipes outdoor construction for the purpose of, for example, laminating a protective lining or the like serving also as pipe reinforcement, by using an organic or in organic fiber or film or the like. In particular, the composition would be useful for rehabilitation work or the like of the inner surface of a pipe, which is performed without digging up fluid or gas transport pipes already buried under the ground as used in the Cured In Place Pipe (CIPP) technology.

The rehabilitation work of these buried pipes is usually performed by setting the section between a manhole and a manhole as one unit of work. The working procedure comprises, in sequence, mechanical removal of old coating remaining inside of the pipe, washing with water, drying, coating of a resin component, spreading of inverted fibers or films by using hot air or hot water, and maintenance of a given temperature with hot water or hot air. When conducting a rehabilitation using a fiber or a film, in the case of a short work selection, coating of a binder to the inside of the pipe and lamination by spreading of inverted cylindrical fiber or films may be performed even if the pot life of the composition is short, but in the case of a long work selection, a long time over several tens of hours is necessary.

For rehabilitation of pipes used for transporting water or other fluid media, there is a need in this art for a composite system which can be applied to the inside steel or concrete wall of such pipes. Known compositions such as unsaturated polyester/styrene polymer and the like cannot provide appropriate working time (pot life), cause odor or toxicity issues from employed chemicals (e.g., mercaptan, acrylonitrile, isocyanates, styrene) in binders or cannot be applied to multi-layer and non-transparent films/composites due to the curing process (e. g. UV cure).

US Patent Pub No 2010/0227981A1 discloses a composition comprising at least one phenyl glycidyl ether polyepoxide having at least one epoxide group of oxirane structure in the molecule and a curing agent component comprising one salt compound formed from an N-alkanol piperidine and a carboxylic acid which can be used in the rehabilitation of water pipes at a cure temperature of less than 100°C and specifically at 80°C.

It is extremely important that no or minimal leaching (<10ppb) of the curing agent into the water occurs for pipes that carry potable water. Herein is described the use of a salt of a hydrophobic tertiary amine with a hydrophobic carboxylic acid as the curing agent designed for rehabilitation of potable water pipes. This combination of amine and carboxylic acid was demonstrated to provide the cure of epoxy resins at elevated temperature (>55°C). Cured materials made with this curing agent and an epoxy resin showed minimal leaching (<10ppb) of the curing agent in water at 25°C after 28 days.

### BRIEF SUMMARY OF THE INVENTION

The instant invention solves problems associated with known compositions by providing a composition that can be cured at a temperature of less than about 80°C (e.g., 65°C, about 55°C to about 70°C and in some cases about 62°C to about 65°C). The inventive composition is a liquid at ambient conditions and, therefore, can be used to rehabilitate the interior surfaces of pipelines (e.g., at a temperature of about 75°C an uncured composition of the invention has a viscosity of about 1000 to about 2000cP, about 1500 to about 2000cP and in some cases about 1000 to about 1200cP).

The epoxide-based composition according to the present invention comprises at least one epoxide component (component A) and at least one curing agent component (component B). In one aspect of the invention the composition comprises:
(A) an epoxide component comprising a phenyl glycidyl ether polyepoxide; and
(B) a curing agent component comprising a salt compound formed from a hydrophobic tertiary amine bearing an alkyl chain of 10-20 carbon atoms with a carboxylic acid bearing 10-40 carbon atoms in an alkyl chain. Preferably, the hydrophobic tertiary amine bearing an alkyl chain of 10-20 carbon atoms has a water solubility of <0.1g/L.

In another aspect of the invention, the inventive curable epoxide-based composition has an advantage that, even after the mixing of the epoxy component and the curing agent component, the composition can maintain an uncured state over a long period of time, to thereby enable the composition to maintain a workable viscosity until the use of the composition in the next step (or operation). For example, the inventive composition can have a pot life of about 20 to about 30 hours at a temperature of about 25°C and 7 days or greater at 5°C.

The composition may be used with known epoxy diluents such as mono glycidyl ethers to modify the viscosity for ease of processing as desired. Such diluents include butyl glycidyl ether, phenyl glycidyl ether, dodecyl glycidyl ether, and the like.

The curing agent B may be combined with a co-curing agent (<50 wt. % relative to the curing agent B) of a hindered polyether amine if desired to increase cross linking density and mechanical strength of the cured product. In addition, a small amount of a known epoxy cure accelerator (< 10 wt. % relative to component B) may be blended into component B to further decrease cure time if needed without compromising latency.

In a further aspect, the inventive epoxide-based composition ensures that an uncured condition after mixing an epoxide component and a curing agent component can be maintained for a long period of time, a subsequent process such as coating, sandwiching, impregnation and injection can be performed at leisure, and furthermore, later curing can be performed even at a relatively low temperature of 80°C or less within 3h. This aspect of the invention is useful for rehabilitation and repair work of buried pipes.

In one aspect, the present invention provides an epoxide-based composition which ensures that flowable (non-gelled) condition is maintained for a long period (e.g., a period up to 24 hours at 25 °C and more than 7 days at 5 °C) after the mixing of an epoxide compound and a curing component, and that the viscosity of the mixture within 16 hours does not exceed 10,000cP thereby facilitating the subsequent application and spreading of the composition. The present invention also provides an epoxide-based composition such that it can be cured by using a heat medium such as hot water or hot air or other heating devices in the moderate temperature range (e.g., about 55 to about 80°C).

The present invention provides a composition having up to 24 hours pot life at 25°C and 7 days or greater when stored at 5°C. The composition re-flows upon heating above 55°C, cures under 80°C, and provides good adhesion to concrete, steel fiber glass and PVC substrates.

The salt compound permits the inventive composition to cure at relatively low temperatures (e.g., about 55 to about 80°C) whereas known compositions require a curing temperature of 80-150°C. Consequently, the inventive composition improves the utility of epoxide-based compositions containing the inventive composition; especially when used for applications in which high temperature is difficult to obtain. In one aspect of the invention, the epoxide-based composition is applied onto an interior surface of a pipe in order to repair or remediate the pipe. The relatively low curing temperature of the epoxide-based compositions enable curing the compositions with a heat source (e.g., hot water or steam) that is located remotely from the epoxide-based compositions. Although hot water or steam can cool to a temperature of less than 70°C as it travels to the location of the composition to be cured, such temperatures are adequate to cure the inventive compositions.

One aspect of the invention relates to an epoxide-based composition, comprising
(A) an epoxide component comprising at least one phenyl glycidyl ether polyepoxide having at least two epoxide groups of oxirane structure in the molecule; and
(B) a curing agent component comprising a salt compound formed from a hydrophobic tertiary amine bearing an alkyl chain of 10-20 carbon atoms with a carboxylic acid bearing 10-40 carbon atoms in an alkyl chain. Preferably, the hydrophobic tertiary amine bearing an alkyl chain of 10-20 carbon atoms has a water solubility of <0.1 g/L.

In one preferred embodiment, the amount of the curing agent of component (B) is from about 1 to about 50 wt. parts per 100 wt. parts of the epoxide component (A).

In another preferred embodiment, the epoxide component (A) further comprises an epoxide compound other than a phenyl glycidyl ether polyepoxide.

Preferably, the epoxide compound other than a phenyl glycidyl ether polyepoxide is at least one compound selected from the group consisting of glycidyl ethers, glycidyl esters and glycidyl amines.

Preferably, the tertiary amine is selected from the group consisting of N,N-dimethyldecylamine, N,N-dimethylundecylamine, N,N-dimethyldodecylamine, N,N-dimethyltridecylamine, N,N-dimethyltetradecylamine, N,N-dimethylpentadecylamine and N,N-dimethylhexadecylamine. Preferably, the carboxylic acid is selected from the group consisting of decanoic acid, undecanoic acid, dodecanoic acid, tridecanoic acid, tetradecanoic acid, pentadecanoic acid, hexadecanoic acid, heptadecanoic acid, tall oil fatty acid, dimer acid and mixtures thereof.

### DETAILED DESCRIPTION OF THE INVENTION

The epoxide-based composition according to the present invention can provide a flowable condition that is maintained for a long period (e.g. a viscosity less than 10,000cP at a temperature of 25°C period up to 24 hours) after the mixing of an epoxide compound and a curing agent component, and that the viscosity within 16 hours does not exceed 10,000cP. In addition, the epoxy composition of this invention can also be stored at 5 °C for 7 days or greater without compromising the latency (e.g. a viscosity less than 10,000cP at a temperature of 25°C). The advantage of storing at low temperature allows for flexibility in applying the curing agent composition in the factory setting and subsequently transporting the saturated liners to the jobsite for CIPP use. It is envisioned that the liner will be flexible when it is inserted into the underground pipes during rehabilitation.

Further, the epoxide-based composition can be cured by using a heat medium such as hot water or hot air in a moderate temperature range (e.g., a temperature of about 55°C to about 80°C). Therefore, the epoxide-based composition according to the present invention can be used in rehabilitation work of buried pipes as a conduit for various fluids.

Further, the epoxide-based composition according to the present invention is effective for rehabilitation work performed without digging up buried pipes.

Herein below, the present invention will be described in detail. In the following description, "%" and "part(s)" representing a quantitative proportion or ratio are those based on mass, unless otherwise noted specifically.

An aspect of the invention is an epoxide-based composition comprising an epoxide component (component A) and a curing agent component (component B) in which the epoxide component comprises a phenyl glycidyl ether-based polyepoxide having at least two epoxide groups of oxirane structure in the molecule; and a curing agent component comprising a salt compound formed from a hydrophobic tertiary amine bearing an alkyl chain of 10-20 carbon atoms with a carboxylic acid bearing 10-40 carbon atoms in an alkyl chain. Preferably, the hydrophobic tertiary amine bearing an alkyl chain of 10-20 carbon atoms has a water solubility of <0.1 g/L.

Preferably, the hydrophobic tertiary amine is selected from the group consisting of N,N-dimethyldecylamine, N,N-dimethylundecylamine, N,N-dimethyldodecylamine, N,N-dimethyltridecylamine, N,N-dimethyltetradecylamine, N,N-dimethylpentadecylamine , N,N-dimethylhexadecylamine, N,N-dimethylheptadecylamine, N,N-dimethyloctadecylamine, N,N-dimethylnonadecylamine N,N-diethyldecylamine, N,N-diethylundecylamine, N,N-diethyldodecylamine, N,N-diethyltridecylamine, N,N-diethyltetradecylamine, N,N-diethylpentadecylamine N,N-diethylhexadecylamine, N,N-diethylheptadecylamine, N,N-diethyloctadecylamine, and N,N-diethylnonadecylamine.

Preferably, the carboxylic acid is selected from the group consisting of decanoic acid, undecanoic acid, dodecanoic acid, tridecanoic acid, tetradecanoic acid, pentadecanoic acid, hexadecanoic acid, heptadecanoic acid, tall oil fatty acid, dimer acid, and mixtures thereof.

Preferably, the epoxide component comprises at least one compound selected from the group consisting of aromatic diglycidyl ethers and glycidyl ethers. In one preferred embodiment, the epoxide component comprises diglycidyl ethers of bisphenol A, diglycidyl ethers of bisphenol F, or a combination thereof.

In one preferred embodiment, the epoxide component (A) further comprises an epoxide compound other than a phenyl glycidyl ether polyepoxide.

Preferably, the epoxide compound other than a phenyl glycidyl ether polyepoxide comprises at least one compound selected from the group consisting of glycidyl ethers, glycidyl esters and glycidyl amines.

Preferably, the amount of epoxide component can range from about 70 to less than 100 wt.% of the epoxide- based composition, about 85 to about 60 wt.% of the epoxide- based composition and in some cases about 80 to about 90 wt.% of the epoxide- based composition. Preferably, the curing agent component can range from about 5 to about 30 wt.% of the epoxide- based composition, about 40 to about 20 wt.% of the epoxide- based composition and in some cases about 20 to about 10wt.% of the epoxide- based composition.

In another preferred embodiment, the curing agent component (B) further comprises a co-curing agent of a hindered polyether amine.

In another preferred embodiment, the epoxide-based composition further comprises an epoxy cure accelerator selected from the group consisting of 1-methylimidazole, 2-methylimidazole, tris(dimethylaminomethyl)phenol, and dimethylaminomethyl phenol. Preferably, the epoxy cure accelerator is blended into the curing agent component (B).

In another preferred embodiment, the epoxide-based composition further comprises a diluent selected from the group consisting of butyl glycidyl ether, phenyl glycidyl ether, dodecyl glycidyl ether, and the like.

In a preferred embodiment, the amount of the curing agent component (B) is from about 1 to about 50 wt parts per 100 wt parts of the epoxide component (A). In another preferred embodiment, the amount of the curing agent component (B) is from about 5 to about 20 wt. parts per 100 wt parts of the epoxide component (A). In another preferred embodiment, the amount of the curing agent component (B) is from about 10 to about 30 wt. parts per 100 wt parts of the epoxide component (A).

Preferably, the epoxide component and the curing agent component can be combined by using any suitable equipment and methods such as mixing, stirring, pumping, among other equipment and methods known in this art.

Preferably, the salts of the curing agent can be obtained by reacting the amine with the carboxylic acid at <80°C for 10 minutes to 6 hours. Preferably, the molar ratio of amine to carboxylic acid is about 1:1.

In a preferred embodiment, the salt of the mixture ranges from 5-40 wt% of the composition.

The curable epoxide-based compositions disclosed herein may be used in potable water application in cured in place pipe (CIPP).

The epoxide-based composition according to the present invention may have the following Properties (1)-(3).

### Property 1

Under conditions used in the examples, the viscosity of the epoxide-based composition according to the present invention within 24 hours stored at 25°C and 7 days at 5°C is <10,000cP. Viscosity is determined by using a Brookfield viscometer (Brookfield HT-2DB). A disposable aluminum spindle (Brookfield SC4-27D) is inserted into the chamber containing curing agent mixture and the viscometer (Brookfield RVDV-II+ Pro) is started to collect data points at the rate of 1 per minute in accordance with standard testing procedures.

### Property 2

The epoxy-based compositions according to the present invention can be cured and hard to the touch without stickiness at a temperature of about <75°C within a period of about 3h. The curing temperature and time are inversely related in that given a longer period of time the curing temperature can be lowered. The curing temperature can range from about 55°C to about 80°C, about 65°C to about 70°C and in some cases about 60°C to about 65°C. The curing time can range from about 1h to about 3h, about 2h to about 3h and in some cases about 3h to about 4h.

### Property 3

The epoxy-based compositions according to the present invention can be cured and hard to the touch without stickiness at <75°C within 3h in the presence of at least 1 wt % water. The inventive compositions can be cured in an environment containing about 2% to about 5%, about 3% to about 5% and in some cases about 4% to about 8% water.

The epoxide component (A) of the composition of the present invention comprises a phenyl glycidyl ether epoxide having a plurality of oxirane structures in the molecule and having reactivity with an amine, and examples thereof may comprise the following: aromatic diglycidyl ethers obtained by reacting diphenols such as bisphenol A, bisphenol F, bisphenol AD, tetramethylbisphenol A, tetramethyl bisphenol F or biphenyl, with epichlorohydrin; glycidyl ether obtained by reacting a novolak such as phenol novolak, cresol novolak, ethylphenol novolak, propylphenol novolak, butylphenol novolak, pentylphenol novolak, octylphenol novolak or nonylphenol novolak, with epichlorohydrin; and glycidyl ethers obtained by reacting a polyhydric phenol such as catechol, resorcinol, trihydroxybiphenyl, dihydroxybenzophenone, bisresorcinol, hydroquinone, tris (hydroxyphenyl) methane, tetrakis(hydroxyphenyl) ethane or bisphenol, with epichlorohydrin; and mixtures thereof.

Among the epoxy compounds above, preferred results can be achieved by using diglycidyl ethers of bisphenol A, diglycidyl ethers of bisphenol F, or a combination thereof.

Examples of the epoxides which can be used in combination with the phenyl glycidyl ether epoxides may comprise at least one member selected from at least one of the groups of:
(1) polyglycidyl ethers generated by reacting an aliphatic polyhydric alcohol such as glycol, neopentylalcohol, ethyleneglycol, propyleneglycol, tetramethyleneglycol, hexaneglycol, polyethyleneglycol or polypropylene glycol, with epichlorohydrin;
(2) glycidyl ether esters generated by reacting a hydroxycarboxylic acid such as p-oxybenzoic acid or β-oxynaphthoic acid, with epichlorohydrin;
(3) polyglycidyl ester generated by reacting a polycarboxylic acid such as phthalic acid, methylphthalic acid, isophtalic acid, terephthalic acid, tetrahydroxyphthalic acid, hexahydroxyphthalic acid, endomethylenetetrahydroxyphthalic acid, endomethylenehexahydroxyphthalic acid, trimellitic acid, a dimer acid or a polymerized fatty acid, with epichlorohydrin;
(4) diglycidylamino esters generated by reacting an aminobenzoic acid with epichlorohydrin; and
(5) polyglycidylamines generated by reacting aniline, toluidine, m-xylylenediamine, 1,2-diaminocyclohexane, 4,4-diaminodiphenyl ether, 4,4-diaminodiphenylmethane, 4,4-diaminodiphenylsulfone, hydantoin, an alkylhydantoin or cyanuric acid, with epichlorohydrin.

The curing agent component (component B) comprises a salt compound formed, from a hydrophobic tertiary amine bearing an alkyl chain of 10-20 carbon atoms with a carboxylic acid bearing 10-40 carbon atoms in an alkyl chain. The hydrophobic tertiary amine bearing an alkyl chain of 10-20 carbon atoms has a water solubility of <0.1g/L.

While any suitable tertiary amine can be employed for making the foregoing salts, examples of preferred suitable tertiary amines is selected from the group consisting of N,N-dimethyldecylamine, N,N-dimethylundecylamine, N,N-dimethyldodecylamine, N,N-dimethyltridecylamine, N,N-dimethyltetradecylamine, N,N-dimethylpentadecylamine , N,N-dimethylhexadecylamine, N,N-dimethylheptadecylamine, N,N-dimethyloctadecylamine, N,N-dimethylnonadecylamine N,N-diethyldecylamine, N,N-diethylundecylamine, N,N-diethyldodecylamine, N,N-diethyltridecylamine, N,N-diethyltetradecylamine, N,N-diethylpentadecylamine N,N-diethylhexadecylamine, N,N-diethylheptadecylamine, N,N-diethyloctadecylamine, and N,N-diethylnonadecylamine. Any other tertiary amines with the same or mixed alkyl groups together with the hydrophobic alkyl chain (12-20 carbon atoms) are also suitable.

Preferably in one embodiment, the carboxylic acid of the tertiary amines salt as curing agent component of the present invention is selected from the group consisting of decanoic acid, undecanoic acid, dodecanoic acid, tridecanoic acid, tetradecanoic acid, pentadecanoic acid, hexadecanoic acid, heptadecanoic acid, tall oil fatty acid, dimer acid, and mixtures thereof.

Preferably, the salts can be formed by reacting the amine with the carboxylic acid at <80°C for about 10 minutes to about 6h. The molar ratio of amine to carboxylic acid is about 1:1 and can range from about 0.8 mol eq to about 1.0 mol eq, about 0.9 mol eq. to about 1.0 mol eq and in some cases about 1.0 mol eq to about 1.5 mol eq.

Preferably, component B of the epoxide-based composition of the present invention can comprise a carboxylic acid equivalent of the component B from about 0.8 to about 1.2, about 1.1 to about 1.2, and in some cases about 1.0 to about 1.5 equivalents per mole of the hydrophobic tertiary amine.

The amount of the curing agent component (B) can range from about 1 to about 50 wt. parts, or about 5 to about 20 wt. parts or 10 about to about 30 parts, per 100 wt. parts of the polyepoxide component (A). If the amount of the component B is less than the range above, a very long pot life after mixing of component (A) and component (B) may be expected, but the subsequent curing may take a long time, which is impracticable. On the contrary, if the curing agent component (B) is combined in excess of the range above, curing after mixing the component (A) and the component (B) may swiftly proceed, but the pot life necessary for operation may become short, which is normally impracticable.

Further, in the composition of the present invention, at least one of a plasticizer, a filler, a coloring agent, an extender, pigment, organic or inorganic fibers, a silicone, titanate or aluminum coupling agent for improving adhesion to the pipe body, a thixotropic agent, and the like may be used in combination, if desired. The amount of the foregoing can range from about 10 wt % to about 20 wt%, about 10 wt% to about 12 wt% and in some cases about 18 wt % to about 20 wt% of the epoxide-based composition.

Preferably, the composition may be used with known epoxy diluents such as a mono glycidyl ethers to modify the viscosity for ease of processing as desired. Such diluents include butyl glycidyl ether, phenyl glycidyl ether, dodecyl glycidyl ether, and the like.

Preferably, in one embodiment, the curing agent B may be combined with a small amount of a hindered polyether amine (<50 wt % relative to B) if desired to increase cross linking density and mechanical strength of the cured product if desired. Preferred hindered polyether amines include Jeffamine D230, Jeffamine T400 and Jeffamine T403 available from Huntsmann Corporation. Preferably in a further embodiment, in addition a small amount of a known epoxy cure accelerator (< 10 wt % relative to component B) may be blended into component B to further decrease cure time if needed without compromising latency. Preferably, the epoxy cure accelerator is selected from the group consisting of imidazoles such as 1-methylimidazole, 2-methylimidazole and tertiary amine substituted phenols such as tris(dimethylaminomethyl)phenol, (Ancamine K-54 available from Evonik Corp.) and dimethylaminomethyl phenol (Ancamine 1110 available from Evonik Corp.).

The following Examples are provided to illustrate certain aspects of the instant inventions and shall not limit the scope of the claims appended hereto.

### Examples

### Example 1: General procedure for preparation of curing agents.

The tertiary amine (1 mole) was charged into a 3-neck round bottom flask equipped with an overhead mechanical stirrer and nitrogen inlet and thermocouple. The acid (1 mole relative to amine) was added slowly to maintain the temperature at <80°C. If the acid is a solid then it is melted first and added to the amine in a liquid state.

### Example 2: Latency of amine curatives

The curing agent is mixed with 100g of bis-phenol A diglycidyl ether (EPON 828) at a certain loading using a spatula in a 200 mL glass jar. The material is let to sit for a set time before testing. 15 g of this material is transferred into a disposable aluminum chamber (Brookfield HT-2DB). A disposable aluminum spindle (Brookfield SC4-27D) is inserted into the chamber containing curing agent mixture and the Start viscometer (Brookfield RVDV-II+ Pro) is stated to collect data points at the rate of 1 per minute. If viscosity is less than 10,000 cP at 25°C, then the material is still flowable. The measurements were done on the mixture when stored at 25°C for 24hs and 5°C for 7 days. Results are shown in Table 1.

### Example 3: Viscosity and pot-life Testing at 65°C

The curing agent is mixed with 100g of bis-phenol A diglycidyl ether (EPON 828) at a certain loading using a spatula in a 200 mL glass jar. The material is stored at 5°C for 7 days before testing. 15 g of this material is transferred into a disposable aluminum chamber (Brookfield HT-2DB). A disposable aluminum spindle (Brookfield SC4-27D) is inserted into the chamber that is heated at 65°C containing curing agent mixture and the Start viscometer (Brookfield RVDV-II+ Pro) is stated to collect data points at the rate of 1 per minute. The initial viscosity and pot-life (time to 10,000 c) are recorded (Table 2).

### Example 4: Testing procedure of curing agents with epoxy resin at 75°C

The curing agent is mixed with 100g of bis-phenol A diglycidyl ether (EPON 828) at a certain loading using a spatula in a 200 mL glass jar. Pucks are prepared from this mixture by transferring to a 2 oz metal container, the curing agent and epoxy resin mixture (about 5-7 g). Two pucks are prepared, one with and one without water. In the former a small amount of water is applied to one puck, about 2 g, but not enough to completely cover the entire surface. The pucks are placed into an oven at 75°C for 2 hrs or until cured. The cure time and surface characteristics of the cooled pucks are noted, and tackiness, glassiness, and entrained air were determined by visual observation and hardness to touch (Table 2).

**Table 1.**

| Curing agent | Loading Parts per Hundred (PHR) with Epoxy Resin | Pot-Life at 25°C for 24hours? (Viscosity less than 10,000cP) yes or no | Pot-Life at 5°C for 7 days? (Viscosity less than 10,000cP) yes or no |
|---|---|---|---|
| N,N-dimethylhexadecylamine | 5 | No | No |
| Dodecanoic acid salt of N,N-dimethylhexadecylamine | 5 | Yes | Yes |
| | 10 | Yes | Yes |
| TOFA salt of N,N-dimethylhexadecylamine | 10 | Yes | Yes |
| | 15 | Yes | Yes |
| Dimer Acid salt of N,N-dimethylhexadecylamine | 10 | Yes | Yes |
| Dodecanoic acid salt/TOFA (40:60) of N,N-dimethylhexadecylamine | 10 | Yes | Yes |
| | 15 | Yes | Yes |
| | 10 | Yes | Yes |
| Dodecanoic acid salt/Dimer Acid (40:60) of N,N-dimethylhexadecylamine | 15 | Yes | Yes |
| Dodecanoic acid salt of N,N-dimethylhexadecylamine blend with Jeffamine D230 (90:10) | 10 | Yes | Yes |
| | 15 | Yes | Yes |

**Table 2**

| Curing agent | Loading Parts per Hundred (PHR)with Epoxy Resin) | Viscosity at 65°C after 7 days storage at 5°C (cP) | Pot-life at 65°C after 7 days storage at 5°C? (Time to 10,000 cP) minutes | Complete cure at 75°C after 2 hours (Yes or No) |
|---|---|---|---|---|
| N,N-dimethylhexadecylamine | 5 | Gelled | None | Yes |
| Dodecanoic acid salt of N,N-dimethylhexadecylamine | 5 | 456 | 99 | Yes |
| | 10 | 537 | 68 | Yes |
| TOFA salt of N,N-dimethylhexadecylamine | 10 | 650 | 60 | Yes |
| | 15 | 950 | 48 | Yes |
| Dimer Acid salt of N,N-dimethylhexadecylamine | 10 | 831 | 54 | Yes |
| Dodecanoic acid salt/TOFA (40:60) of N,N-dimethylhexadecylamine | 10 | 887 | 49 | Yes |
| | 15 | 918 | 42 | Yes |
| Dodecanoic acid salt/Dimer Acid (40:60) of N,N-dimethylhexadecylamine | 10 | 531 | 41 | Yes |
| | 15 | 425 | 35 | Yes |
| Dodecanoic acid salt of N,N-dimethylhexadecylamine blend with Jeffamine D230 (90:10) | 10 | 537 | 57 | Yes |
| | 15 | 681 | 36 | Yes |

### Example 5: Cured in Place Pipe simulated application.

To understand the applicability of the curing agent in the cured in place pipe (CIPP) application, the following experiment was conducted.

The curing agent (50g) (a mixture of the Dodecanoic acid salt of N,N-dimethylhexadecylamine blend with Jeffamine D230 (90:10) was mixed with standard DGEBA type liquid epoxy resin (500g) having EEW=190 at ambient conditions. The mixed mass was enough to wet out a 4" diameter and a commercially available foot long cylindrical felt comprising commercially available-polyester fibers and polyethylene lining. The mixed mass was applied to the felt by manually pouring the mixed mass in the felt until full saturation. This type of felt is commonly used for underground pipe rehabilitation.

The mixed mass was evenly applied to the interior of the felt and the felt was stored at 5°C for 7 days to check the product shelf stability. After 7 days, the felt was removed from 5°C storage and let to equilibrate at 25°C for 24 hours. The felt appeared to be soft, the mixed material was still tacky and the felt was soft enough to be processed further. The saturated felt was then baked at 65°C for 2 hours in an oven. After it cooled down, the felt was very rigid and the cured epoxy matrix demonstrated acceptable flexural modulus (>300,000 psi (>2.07 GPa)) that is required by the industry. Flexural modulus was determined by ASTM D-790.

## Claims

1. An epoxide-based composition, comprising
(A) an epoxide component comprising at least one phenyl glycidyl ether polyepoxide having at least two epoxide groups of oxirane structure in the molecule; and
(B) a curing agent component comprising a salt compound formed from a hydrophobic tertiary amine bearing an alkyl chain of 10-20 carbon atoms with a carboxylic acid bearing 10-40 carbon atoms in an alkyl chain.

2. The composition of claim 1 wherein the hydrophobic tertiary amine is selected from the group consisting of N,N-dimethyldecylamine, N,N-dimethylundecylamine, N,N-dimethyldodecylamine, N,N-dimethyltridecylamine, N,N-dimethyltetradecylamine, N,N-dimethylpentadecylamine , N,N-dimethylhexadecylamine, N,N-dimethylheptadecylamine, N,N-dimethyloctadecylamine, N,N-dimethylnonadecylamine N,N-diethyldecylamine, N,N-diethylundecylamine, N,N-diethyldodecylamine, N,N-diethyltridecylamine, N,N-diethyltetradecylamine, N,N-diethylpentadecylamine N,N-diethylhexadecylamine, N,N-diethylheptadecylamine, N,N-diethyloctadecylamine, and N,N-diethylnonadecylamine.

3. The composition of any of claims 1-2 wherein the carboxylic acid is selected from the group consisting of decanoic acid, undecanoic acid, dodecanoic acid, tridecanoic acid, tetradecanoic acid, pentadecanoic acid, hexadecanoic acid, heptadecanoic acid, tall oil fatty acid, dimer acid, and mixtures thereof.

4. The composition of any of claims 1-3 wherein the epoxide component comprises at least one compound selected from the group consisting of aromatic diglycidyl ethers and glycidyl ethers.

5. The composition of claim 4 wherein the epoxide component comprises diglycidyl ethers of bisphenol A, diglycidyl ethers of bisphenol F, or a combination thereof.

6. The composition according to any of claims 1-5, wherein the epoxide component (A) further comprises an epoxide compound other than a phenyl glycidyl ether polyepoxide.

7. The composition according to claim 6, wherein the epoxide compound other than a phenyl glycidyl ether polyepoxide comprises at least one compound selected from the group consisting of glycidyl ethers, glycidyl esters and glycidyl amines.

8. The composition of any of claims 1-7 wherein the curing agent component further comprises a co-curing agent of a hindered polyether amine.

9. The composition of claim 8 further comprising an epoxy cure accelerator selected from the group consisting of 1-methylimidazole, 2-methylimidazole, tris(dimethylaminomethyl)phenol, and dimethylaminomethyl phenol.

10. The composition of any of claims 1-9 further comprising a diluent selected from the group consisting of butyl glycidyl ether, phenyl glycidyl ether, dodecyl glycidyl ether, and the like.

11. The composition of any of claims 1-10 wherein the amount of the curing agent component (B) is from about 1 to about 50 wt parts per 100 wt parts of the epoxide component (A).

12. The composition of any of claims 1-10 wherein the salt of the mixture ranges from 5-40 wt % of the composition.

13. Use of a composition of any of claims 1-12 in potable water application in cured in place pipe.

## Patentansprüche

1. Zusammensetzung auf Epoxidbasis, umfassend
(A) eine Epoxidkomponente, die mindestens ein Phenylglycidyletherpolyepoxid mit mindestens zwei Epoxidgruppen mit Oxiranstruktur im Molekül umfasst, und
(B) eine Härterkomponente, die eine Salzverbindung umfasst, die aus einem hydrophoben tertiären Amin mit einer Alkylkette mit 10-20 Kohlenstoffatomen und einer Carbonsäure mit 10-40 Kohlenstoffatomen in einer Alkylkette gebildet ist.

2. Zusammensetzung nach Anspruch 1, wobei das hydrophobe tertiäre Amin aus der aus N,N-Dimethyldecylamin, N,N-Dimethylundecylamin, N,N-Dimethyldodecylamin, N,N-Dimethyltridecylamin, N,N-Dimethyltetradecylamin, N,N-Dimethylpentadecylamin, N,N-Dimethylhexadecylamin, N,N-Dimethylheptadecylamin, N,N-Dimethyloctadecylamin, N,N-Dimethylnonadecylamine N,N-Diethyldecylamin, N,N-Diethylundecylamin, N,N-Diethyldodecylamin, N,N-Diethyltridecylamin, N,N-Diethyltetradecylamin, N,N-Diethylpentadecylamine N,N-Diethylhexadecylamin, N,N-Diethylheptadecylamin, N,N-Diethyloctadecylamin und N,N-Diethylnonadecylamin bestehenden Gruppe ausgewählt ist.

3. Zusammensetzung nach einem der Ansprüche 1-2, wobei die Carbonsäure aus der aus Decansäure, Undecansäure, Dodecansäure, Tridecansäure, Tetradecansäure, Pentadecansäure, Hexadecansäure, Heptadecansäure, Tallölfettsäure, Dimersäure und Mischungen davon bestehenden Gruppe ausgewählt ist.

4. Zusammensetzung nach einem der Ansprüche 1-3, wobei die Epoxidkomponente mindestens eine aus der aus aromatischen Diglycidylethern und Glycidylethern bestehenden Gruppe ausgewählte Verbindung umfasst.

5. Zusammensetzung nach Anspruch 4, wobei die Epoxidkomponente Diglycidylether von Bisphenol A, Diglycidylether von Bisphenol F oder eine Kombination davon umfasst.

6. Zusammensetzung nach einem der Ansprüche 1-5, wobei die Epoxidkomponente (A) weiterhin eine von einem Phenylglycidyletherpolyepoxid verschiedene Epoxidverbindung umfasst.

7. Zusammensetzung nach Anspruch 6, wobei die von einem Phenylglycidyletherpolyepoxid verschiedene Epoxidverbindung mindestens eine aus der aus Glycidylethern, Glycidylestern und Glycidylaminen bestehenden Gruppe ausgewählte Verbindung umfasst.

8. Zusammensetzung nach einem der Ansprüche 1-7, wobei die Härterkomponente weiterhin ein Co-Härtungsmittel aus einem sterisch gehinderten Polyetheramin umfasst.

9. Zusammensetzung nach Anspruch 8, weiterhin umfassend einen aus der aus 1-Methylimidazol, 2-Methylimidazol, Tris(dimethylaminomethyl)phenol und Dimethylaminomethylphenol bestehenden Gruppe ausgewählten Epoxyhärtungsbeschleuniger.

10. Zusammensetzung nach einem der Ansprüche 1-9, weiterhin umfassend ein aus der aus Butylglycidylether, Phenylglycidylether, Dodecylglycidylether und dergleichen bestehenden Gruppe ausgewähltes Verdünnungsmittel.

11. Zusammensetzung nach einem der Ansprüche 1-10, wobei die Menge der Härterkomponente (B) etwa 1 bis etwa 50 Gew.-Teile pro 100 Gew.-Teile der Epoxidkomponente (A) beträgt.

12. Zusammensetzung nach einem der Ansprüche 1-10, wobei das Salz der Mischung im Bereich von 5-40 Gew.-% der Zusammensetzung liegt.

13. Verwendung einer Zusammensetzung nach einem der Ansprüche 1-12 bei einer Trinkwasseranwendung in einem an Ort und Stelle gehärteten Rohr.

## Revendications

1. Composition à base d'époxyde, comprenant
(A) un composant époxyde comprenant au moins un polyépoxyde d'éther de glycidyle et de phényle ayant au moins deux groupes époxyde de structure oxirane dans la molécule ; et
(B) composant agent durcisseur comprenant un composé de type sel formé à partir d'une amine tertiaire hydrophobe portant une chaîne alkyle de 10 à 20 atomes de carbone et d'un acide carboxylique portant 10 à 40 atomes de carbone dans une chaîne alkyle.

2. Composition selon la revendication 1, dans laquelle l'amine tertiaire hydrophobe est choisie dans le groupe constitué par la N,N-diméthyldécylamine, la N,N-diméthylundécylamine, la N,N-diméthyldodécylamine, la N,N-diméthyltridécylamine, la N,N-diméthyltétradécylamine, la N,N-diméthylpentadécylamine, la N,N-diméthylhexadécylamine, la N,N-diméthylheptadécylamine, la N,N-diméthyloctadécylamine, la N,N-diméthylnonadécylamine, la N,N-diéthyldécylamine, la N,N-diéthylundécylamine, la N,N-diéthyldodécylamine, la N,N-diéthyltridécylamine, la N,N-diéthyltétradécylamine, la N,N-diéthylpentadécylamine, la N,N-diéthylhexadécylamine, la N,N-diéthylheptadécylamine, la N,N-diéthyloctadécylamine et la N,N-diéthylnonadécylamine.

3. Composition selon l'une quelconque des revendications 1 à 2 dans laquelle l'acide carboxylique est choisi dans le groupe constitué par l'acide décanoïque, l'acide undécanoïque, l'acide dodécanoïque, l'acide tridécanoïque, l'acide tétradécanoïque, l'acide pentadécanoïque, l'acide hexadécanoïque, l'acide heptadécanoïque, un acide gras de tallôl, un acide dimère et les mélanges de ceux-ci.

4. Composition selon l'une quelconque des revendications 1 à 3 dans laquelle le composant époxyde comprend au moins un composé choisi dans le groupe constitué par les éthers glycidyliques et éthers diglycidyliques aromatiques.

5. Composition selon la revendication 4 dans laquelle le composant époxyde comprend des éthers diglycidyliques de bisphénol A, des éthers diglycidyliques de bisphénol F ou une combinaison de ceux-ci.

6. Composition selon l'une quelconque des revendications 1 à 5, dans laquelle le composant époxyde (A) comprend en outre un composé époxyde autre qu'un polyépoxyde d'éther de glycidyle et de phényle.

7. Composition selon la revendication 6, dans laquelle le composé époxyde autre qu'un polyépoxyde d'éther de glycidyle et de phényle comprend au moins un composé choisi dans le groupe constitué par les éthers glycidyliques, les esters glycidyliques et les glycidylamines.

8. Composition selon l'une quelconque des revendications 1 à 7 dans laquelle le composant agent durcisseur comprend en outre un co-agent durcisseur d'une polyétheramine encombrée.

9. Composition selon la revendication 8 comprenant en outre un accélérateur de durcissement d'époxy choisi dans le groupe constitué par le 1-méthylimidazole, le 2-méthylimidazole, le tris(diméthylaminométhyl)phénol et le diméthylaminométhylphénol.

10. Composition selon l'une quelconque des revendications 1 à 9 comprenant en outre un diluant choisi dans le groupe constitué par l'éther de butyle et de glycidyle, l'éther de glycidyle et de phényle, l'éther de dodécyle et de glycidyle et similaires.

11. Composition selon l'une quelconque des revendications 1 à 10 dans laquelle la quantité du composant agent durcisseur (B) va d'environ 1 à environ 50 parties en poids pour 100 parties en poids du composant époxyde (A).

12. Composition selon l'une quelconque des revendications 1 à 10 dans laquelle le sel du mélange se situe dans la plage allant de 5 à 40 % en poids de la composition.

13. Utilisation d'une composition selon l'une quelconque des revendications 1 à 12 dans une application d'eau potable dans un chemisage durci en place.
